# EUROPEAN PATENT APPLICATION

(11) **EP 4 811 620 A1**
(43) Date of publication of application: **23.09.2026**
(21) Application number: 25315093.2
(22) Date of filing: 21.03.2025
(51) Int. Cl.: H02K 5/22, E05B 81/06, E05B 81/54, H01R 103/00, H02K 11/33

(54) **MOTOR ASSEMBLY AND VEHICLE DOOR LOCK WITH SUCH A MOTOR ASSEMBLY**

(71) Applicant: Minebea AccessSolutions France, 94140 Alfortville (FR)
(72) Inventor: DEBROUCKE, François, 94140 ALFORTVILLE (FR); BOUTOILLE, Corentin, 94140 ALFORTVILLE (FR); SZALAI, Aurélie, 94140 ALFORTVILLE (FR)
(74) Representative: Innovincia

(57) **Abstract**

The invention relates to a motor assembly (100), particularly for a vehicle door latch, the motor assembly (100) including a motor (1) comprising:
- an output shaft (3) rotatably mounted around a rotation axis (B),
- a stator (5) provided at one end face (51) with at least two connection terminals (9) extending axially,
- a socket (7) mounted on the stator (5), configured to be plugged onto an electrical carrier (200), and comprising at least two electrically conductive members (11), each one interfacing a connection terminal (9) of the stator 5 on one side and configured to interface a connection pin (201) of the electrical carrier (200) on the other side, the connection pin (201) being configured to extend perpendicular to the rotation axis (B). The invention also relates to a vehicle door latch comprising such a motor assembly (100) and the electrical carrier (200).

## Description

### TECHNICAL FIELD

The present invention relates to motors assemblies, particularly a motor assembly used in vehicle door latches. The invention also relates to a door latch, such as a vehicle door latch, comprising such a motor assembly.

### BACKGROUND OF THE INVENTION

Motors are commonly used to drive some kinematics from electrical power inside a powered latch, such as a vehicle door latch. A motor comprising a rotor with a rotating output shaft, and a stator that can be arranged to surround the rotor, has been conventionally known.

The motor is usually connected to an electrical module (or electrical carrier) in the door latch for transmitting the electrical power and driving the motor.

According to an embodiment, such a connection is done through connection pins of the electrical module or electrical carrier interfacing connection terminals of the motor, in the radial direction, generally provided with holes. This connection is done perpendicular to the output shaft, the connection terminals of the motor directly facing the connection pins of the electrical module or electrical carrier.

In some applications, the motor is provided with connection terminals in the axial direction. The integration and the connection of such motor with the electrical module or electrical carrier in the door latch are more complex and increase the assembly time. When integrated in the door latch, the connection terminals of the motor are therefore perpendicular to the connection pins of the electrical module or electrical carrier. Therefore, the motor cannot be plugged directly onto the electrical module or electrical carrier.

A solution requires linking by wires the connection pins of the electrical module or electrical carrier and the axial connection terminals of the motor. Another solution is to change and design a new electrical module or electrical carrier which is the most expensive part of the door latch.

One aim of the present invention is to prevent at least partially the drawbacks of the prior art and to provide an alternative for assembling and connecting a motor with connection terminals in axial direction, at a lower cost, and without changing the electrical module or electrical carrier in a door latch.

### SUMMARY OF THE INVENTION

The present invention refers to a motor assembly, particularly for a vehicle door latch, the motor assembly including a motor comprising: an output shaft rotatably mounted around a rotation axis, and a stator, provided at one end face with at least two connection terminals extending axially along the rotation axis.

According to the invention, the motor assembly further includes a socket mounted on the stator and configured to be plugged onto an electrical carrier. The socket comprises at least two electrically conductive members, each one interfacing a connection terminal of the stator on one side and configured to interface a connection pin of the electrical carrier on the other side, the connection pin being configured to extend along a longitudinal axis perpendicular to the rotation axis.

The motor and the electrical carrier can be electrically connected through the electrically conductive members inside the socket, having a geometry designed to interface the connection pins coming from the electrical carrier and the connection terminals coming from the motor, extending in two different directions.

The motor assembly may further include one or more of the following features taken alone or in combination.

The electrically conductive members may be internal members received inside the socket.

At least one electrically conductive member may comprise a first end and a second end linked by an intermediate part.

The first end may extend mainly along the longitudinal axis perpendicular to the rotation axis.

The second end may extend mainly along the rotation axis.

The socket may be provided with at least two slots configured to face the connection pins of the electrical carrier.

The first end may be arranged in a respective slot, such that a connection pin of the electrical carrier may be configured to come in contact with the first end through the slot when the socket is plugged onto the electrical carrier.

The connection terminals may protrude from one end face of the stator toward respective openings in the socket, to come in contact with the second ends of the electrically conductive members.

The first end and the second end of an electrically conductive member may be arranged at different axial positions along the rotation axis.

At least one of the first end and the second end comprises at least two tabs facing each other and delimiting in-between a space for inserting the corresponding connection terminal from the stator or connection pin from the electrical carrier.

At least one tab may be elastically deflectable, such that its deflection may be configured to exert a contact force onto the corresponding connection terminal from the stator or connection pin from the electrical carrier.

At least one of the first end and the second end may be realised by a hooking element.

The intermediate part may have a general L-shape with a leg that may extend mainly along the longitudinal axis and another leg that may extend along the rotation axis.

The electrically conductive members may have an essentially rectangular cross-section.

The socket may be formed in an electrically insulating material.

The socket may have a shape complementary to the shape of the stator, such as a tubular or cylindrical shape.

The motor and the socket may be centred around the output shaft.

The socket may be provided with at least one through-hole through which the output shaft passes.

The invention also relates to a door latch, particularly for a motor vehicle, including at least one electrical carrier and a motor assembly as defined above.

The motor assembly includes a motor comprising: an output shaft rotatably mounted around a rotation axis, and a stator, provided at one end face with at least two connection terminals extending axially along the rotation axis.

The motor assembly further includes a socket mounted on the stator and plugged onto the electrical carrier. The socket comprises at least two electrically conductive members, each one interfacing a connection terminal of the stator on one side and interfacing a connection pin of the electrical carrier on the other side, the connection pin extending along a longitudinal axis perpendicular to the rotation axis.

### BRIEF DESCRIPTION OF THE DRAWINGS

FIG. 1 is a perspective view of a portion of a latch including a motor assembly connected to an electrical carrier.
FIG. 2 is a view similar to FIG. 1 where the motor assembly is omitted, showing two connection pins of the electrical carrier.
FIG. 3A is a perspective view of a motor of the motor assembly of FIG. 1 and the two connection pins of the electrical carrier.
FIG. 3B is a perspective view of the motor assembly of FIG. 1 and the two connection pins of the electrical carrier.
FIG. 4 is a schematic representation of a cross-section of the motor assembly connected to the electrical carrier.
FIG. 5 is a cross-sectional view of a socket of the motor assembly interfacing the motor and the electrical carrier.

In these figures, the identical elements have the same reference numbers. Only the elements necessary for the understanding of the invention are shown.

### DETAILED DESCRIPTION OF THE INVENTION

The following embodiments are examples. Although, the specification refers to one or several embodiments, it does not imply that each reference refers to the same embodiment or that the features apply only to a single embodiment. Simple features of different embodiments can also be combined to provide other embodiments, without departing from the scope of the invention, as defined by the claims.

In the description, some elements may be indexed, for example first element or second element. In this case, it is a simple indexing to differentiate and name similar but not identical elements. This indexing does not imply a priority of one element over another and such names can easily be interchanged without going beyond the scope of the present invention.

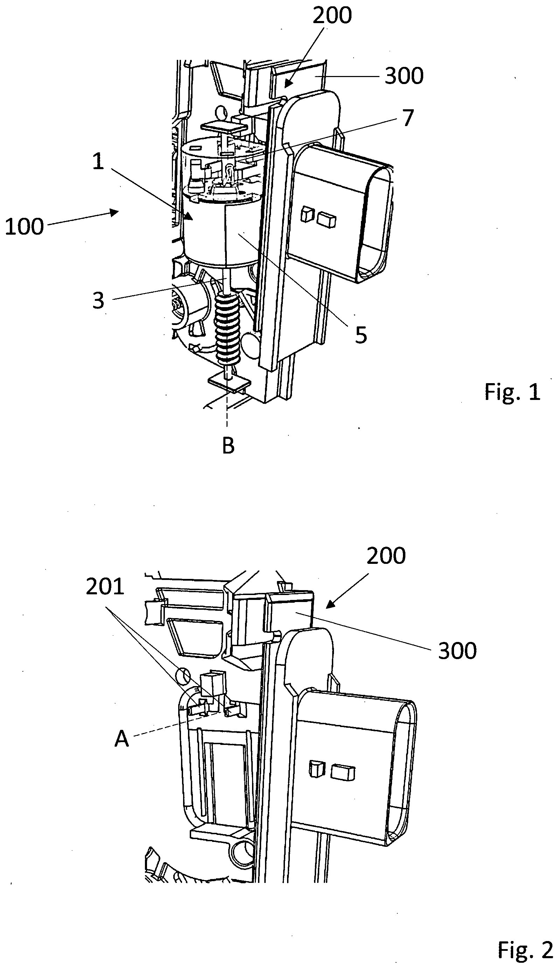

The invention relates to a motor assembly 100 intended to be incorporated in a vehicle door latch for instance. Fig. 1 shows a motor assembly 100 connected to an electrical module or electrical carrier 200 of such a door latch. The motor assembly 100 can be supplied with current, such as direct current, via the electrical carrier 200, specifically via connection pins 201 (Fig. 2) of the electrical carrier 200. The connection pins 201 extend for instance along a longitudinal axis A.

The motor assembly 100 includes a motor 1 comprising a rotor with a rotating output shaft 3 and a stator 5, and a socket 7.

The motor 1 and the socket 7 may be centred around the output shaft 3.

The rotor may rotate with the output shaft 3 around a rotation axis B. In the following, the terms "axial", "axially", "radial", "radially" are defined regarding the rotation axis B. The output shaft 3 extends axially. When arranged in the door latch, the output shaft 3 of the motor 1 extends perpendicularly to the connection pins 201 of the electrical carrier 200.

A worm or endless screw may be arranged at one end portion of the output shaft 3. The output shaft 3 may be configured to drive a power transmission mechanism, such as, for example, a gear wheel not shown.

The stator 5 may be arranged to surround the rotor. The motor 1 may be, but not necessarily, a so-called inner-rotor type motor. The rotor may be mounted rotatably inside the stator by means of bearings arranged on the shaft 3.

The stator 5 may be fixed in a housing 300 of the door latch in which the motor 1 is incorporated.

The stator 5 has for example a tubular or cylindrical shape. The stator 5 may have a first end face 51 and a second end face 52, opposite to each other axially.

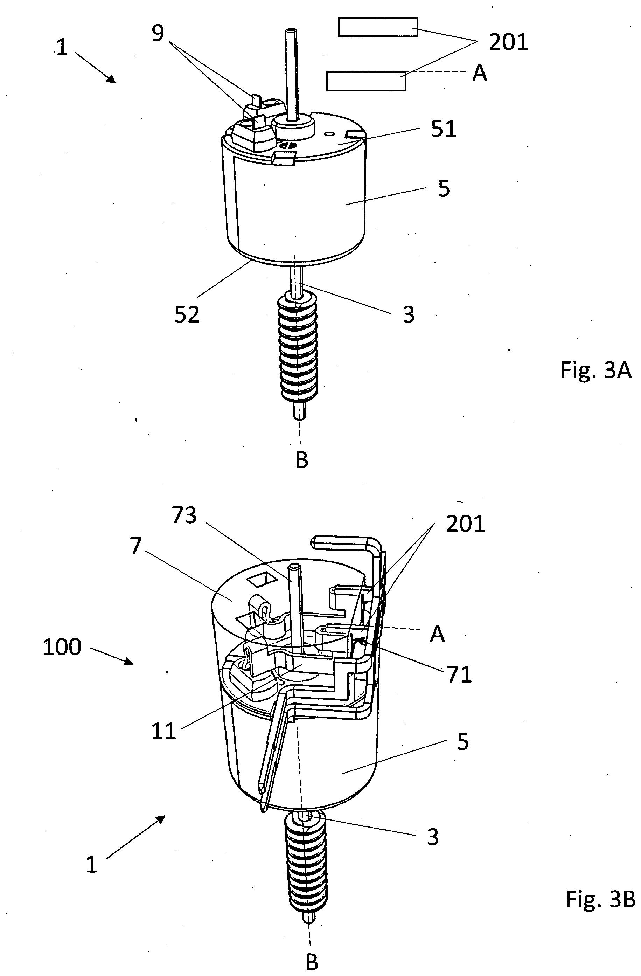

The output shaft 3 may project out from the stator 5 on both end faces 51, 52, in the example of Fig. 3A above the first end face 51 and below the second end face 52 relating to the orientation of the elements in this Fig. 3A.

The motor 1 is provided with at least two connection terminals 9 extending axially and protruding from the stator 5, particularly from the first end face 51. When the motor assembly 100 is assembled with the electrical carrier 200 in the door latch, the connection terminals 9 extend perpendicularly to the connection pins 201 of the electrical carrier 200.

The connection terminals 9 are formed of, for example, an electrically conductive metallic material. Accordingly, the current can be supplied from the electrical carrier 200 to the motor 1 via the connection terminals 9.

The socket 7 is mounted on the stator 5. It can be fixed to the stator 5 by any suitable means, for instance the socket 7 may be snapped on the stator 5.

The socket 7 may be arranged at one of the end faces of the stator 5 like the first end face 51 (the upper face relating to the orientation of the elements in Fig. 3A and Fig. 3B).

The socket 7 may have a shape complementary with the stator 5 shape, for example a tubular or cylindrical shape. The socket 7 and the stator 5 may have the same diameter.

The socket 7 may have an inner end portion facing the first end face 51 of the stator 5. The inner end portion may be at least partially open or may comprise at least two openings for receiving the connection terminals 9.

The socket 7 may have an outer end portion, such as a top portion relating to the orientation of the elements in Fig. 3B, facing the exterior of the motor assembly 100. The inner end portion and outer end portion are axial portions. They are opposite to each other axially.

The socket 7 may receive at least the connection terminals 9 of the stator 5 therein. The socket 7 is advantageously formed in an electrically insulating material, such as plastic.

Furthermore, the socket 7 is provided with slots 71 in which the connection pins 201 of the electrical carrier 200 may engage, when connecting the motor 1 with the electrical carrier 200. The slots 71 are radial to face the connection pins 201 of the electrical carrier 200 when assembling.

The socket 7 may also be provided with at least one through-hole 73 through which the output shaft 3 may pass, when assembled with the motor 1. One or two opposite through-holes 73 may be arranged axially. The through-holes 73 may be central or substantially central. Thus, when the motor 1 is assembled with the socket 7, the output shaft 3 may pass through the socket 7 and possibly project from the outer end portion.

The socket 7 is designed to be directly plugged onto the electrical carrier 200. More precisely, the socket 7 may be plugged onto the electrical carrier 200 with a radial movement during an assembly process. During the assembly process, the socket 7 may be first mounted on the stator 5 and then the motor assembly 100 comprising the socket 7 and the motor 1 is plugged to the electrical carrier 200.

Furthermore, the socket 7 forms an electrical connection arrangement between the connection terminals 9 of the stator 5 and the connection pins 201 of the electrical carrier 200. With the slots 71 on one end for interfacing the connection pins 201 from the electrical carrier 200 and the openings on the other end for interfacing the connection terminals 9 of the motor, the socket 7 forms a female/female connection arrangement.

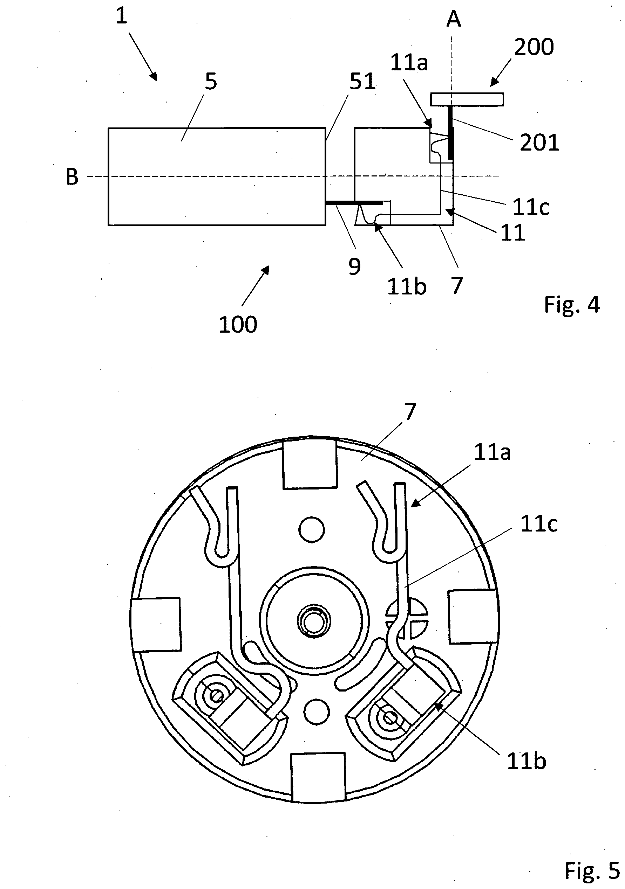

To ensure the electrical connection, the socket 7 includes at least two electrically conductive members 11, each one being intended to interface an axial connection terminal 9 of the stator 5 on one side and to interface a connection pin 201 of the electrical carrier 200 on the other side, as schematically illustrated in Fig. 4. They serve to connect the connection terminals 9 and the connection pins 201 with an electrically conducting connection.

The electrically conductive members 11 may be integrally encased inside the socket 7. They are thus internal conductive members 11. The socket 7 could be overmolded around the electrically conductive members 11.

An electrically conductive member 11 may be form of a single element. As an alternative, an electrically conductive member 11 might be form by a plurality of elements coupled together.

The electrically conductive members 11 may be formed of an electrically conductive metal. At least one, preferably each, electrically conductive member 11 may be formed by a lead frame. The electrically conductive member 11 may have, but not limited to, a rectangular cross-section.

Preferably, both electrically conductive members 11 are identical.

The electrically conductive members 11 are advantageously shaped to link the two directions of extension of the connection terminals 9 and of the connection pins 201.

According to an embodiment, at least one, namely each, electrically conductive member 11 comprises ends 11a, 11b, each one being intended to be in contact with either a connection pin 201 or a connection terminal 9, and an intermediate part 11c linking both ends 11a, 11b. The contact is both mechanical and electrical. Both ends 11a, 11b may be integrally formed with the intermediate part 11c.

A first end 11a may be intended to interface a connection pin 201 when the socket 7 is plugged onto the electrical carrier 200. The first end 11a is arranged in, reaches, a respective slot 71 of the socket 7, such that the first end 11a is accessible from outside through the slot 71.

A second end 11b may interface a connection terminal 9 protruding from the stator 5 when the socket 7 is fixed to the motor 1.

The intermediate part 11c extend between two oppositely disposed first and second ends 11a, 11b.

The first end 11a may extend mainly in or parallel to the longitudinal axis A. The second end 11b may extend mainly in or parallel to the rotation axis B. The intermediate part 11c may have a leg extending mainly along the longitudinal axis A. The intermediate part 11c may have a leg extending along the rotation axis B. Particularly, the intermediate part 11c may have a general L-shape to form a link between the two different directions of extension of both ends 11a, 11b.

The first end 11a may be arranged at the tip of the leg of the intermediate part 11c extending along the rotation axis B. And the second end 11b may be arranged at the tip of the leg of the intermediate part 11c extending along the longitudinal axis A.

The two ends 11a, 11b may not be arranged at the same axial position (or level) inside the socket 7. More precisely one end, for instance the first end 11a, may be above the other one, for instance the second end 11b, along the rotation axis B.

At least one or both ends 11a, 11b may form hooking elements. The hooking elements may be formed by folding or bending the respective end 11a or 11b of the electrically conductive member 11. The folding can be curved.

At least one, preferably each, end 11a, 11b, for instance hook-shaped, may comprise at least two tabs or lugs facing each other, and delimiting between them a space for inserting the corresponding connection terminal 9 or connection pin 201. In other words, the tabs may be arranged to sandwich the corresponding connection terminal 9 or connection pin 201.

The tabs may have a rectangular cross-section.

A first tab may be the closest tab to the intermediate part 11c. A second tab may be the furthest away from the intermediate part 11c.

The first tab may be straight.

The second tab may be flexible or elastically deflectable to ensure that the corresponding connection terminal 9 or connection pin 201 can be held in place and in contact with both tabs when inserted in-between both tabs. The deflection of the second tab may exert the necessary contact force for an effective electrical connection to the corresponding connection terminal 9 or connection pin 201. Accordingly, the hooking elements are able to prevent the connection terminal 9 or connection pin 201 from disconnecting from the socket 7. The flexibility can be achieved by a deformation on the second tab or a contact spring.

The tabs defining for instance the hooking element may be long enough to be able to help maintain in place the corresponding connection terminal 9 or connection pin 201 such that a disconnection is prevented.

Hence, the motor assembly 100 as previously described integrating the socket 7 at one end of the motor 1, which forms a connection interface, allows to connect the motor 1 with axial connection terminals 9 instead of a motor with radial connection terminals. It is therefore possible to plug a motor 1 with axial connection terminals 9 using the socket 7, or as an alternative to plug another kind of motor with radial connection terminals to a same electrical carrier 200. Then the electrical carrier 200 can remain the same, without requiring a huge de-standardization.

The socket 7 forms an added-on plug adaptor. During an assembly process, the socket 7 is plugged / assembled with the motor 1, axially, the motor assembly 100 thus formed can then be directly plugged onto the electrical carrier 200, in a direction perpendicular to the rotation axis B, namely in or parallel to the longitudinal axis A along which the connection pins 201 of the electrical carrier 200 extend.

## Claims

1. Motor assembly (100), particularly for a vehicle door latch, the motor assembly (100) including a motor (1) comprising:
- an output shaft (3) rotatably mounted around a rotation axis (B), and
- a stator (5), provided at one end face (51) with at least two connection terminals (9) extending axially along the rotation axis (B),
- **characterized in that** the motor assembly (100) further includes a socket (7) mounted on the stator (5) and configured to be plugged onto an electrical carrier (200), and **in that**
- the socket (7) comprises at least two electrically conductive members (11), each one interfacing a connection terminal (9) of the stator 5 on one side and configured to interface a connection pin (201) of the electrical carrier (200) on the other side, the connection pin (201) being configured to extend along a longitudinal axis (A) perpendicular to the rotation axis (B).

2. Motor assembly (100) according to the preceding claim, wherein the electrically conductive members (11) are internal members (11) received inside the socket (7).

3. Motor assembly (100) according to one of the preceding claims, wherein at least one electrically conductive member (11) comprises a first end (11a) and a second end (11b) linked by an intermediate part (11c), the first end (11a) extending mainly along the longitudinal axis (A) perpendicular to the rotation axis (B), and the second end (11b) extending mainly along the rotation axis (B).

4. Motor assembly (100) according to the preceding claim, wherein the socket (7) is provided with at least two slots (71) configured to face the connection pins (201) of the electrical carrier (200), and wherein the first end (11a) is arranged in a respective slot (71), such that a connection pin (201) of the electrical carrier (200) is configured to come in contact with the first end (11a) through the slot (71) when the socket (7) is plugged onto the electrical carrier (200).

5. Motor assembly (100) according to one of claims 3 or 4, wherein the connection terminals (9) protrude from one end face (51) of the stator (5) toward respective openings in the socket (7), to come in contact with the second ends (11b) of the electrically conductive members (11).

6. Motor assembly (100) according to one of claims 3 to 5, wherein the first end (11a) and the second end (11b) are arranged at different axial positions along the rotation axis (B).

7. Motor assembly (100) according to one of claims 3 to 6, wherein at least one of the first end (11a) and the second end (11b) comprises at least two tabs facing each other and delimiting in-between a space for inserting the corresponding connection terminal (9) from the stator (5) or connection pin (201) from the electrical carrier (200).

8. Motor assembly (100) according to the preceding claim, wherein at least one tab is elastically deflectable, such that its deflection is configured to exert a contact force onto the corresponding connection terminal (9) from the stator (5) or connection pin (201) from the electrical carrier (200).

9. Motor assembly (100) according to one of claims 7 or 8, wherein at least one of the first end (11a) and the second end (11b) is realised by a hooking element.

10. Motor assembly (100) according to one of claims 3 to 9, wherein the intermediate part (11c) has a general L-shape with a leg extending mainly along the longitudinal axis (A) and another leg extending along the rotation axis (B).

11. Motor assembly (100) according to one of the preceding claims, wherein the electrically conductive members (11) have an essentially rectangular cross-section.

12. Motor assembly (100) according to one of the preceding claims, wherein the socket (7) is formed in an electrically insulating material.

13. Motor assembly (100) according to one of the preceding claims, wherein the motor (1) and the socket (7) are centred around the output shaft (3).

14. Motor assembly (100) according to one of the preceding claims, wherein the socket (7) is provided with at least one through-hole (73) through which the output shaft (3) passes.

15. Door latch, particularly for a motor vehicle, including at least one electrical carrier (200) and a motor assembly (100) according to one of the preceding claims, the motor assembly (100) including:
- a motor (1) comprising an output shaft (3) rotatably mounted around a rotation axis (B), and a stator (5), provided at one end face (51) with at least two connection terminals (9) extending axially along the rotation axis (B), and
- a socket (7) mounted on the stator (5) and plugged onto the electrical carrier (200), the socket (7) comprising at least two electrically conductive members (11), each one interfacing a connection terminal (9) of the stator (5) on one side and interfacing a connection pin (201) of the electrical carrier (200) on the other side, the connection pin (201) extending along a longitudinal axis (A) perpendicular to the rotation axis (B).
